# DEMANDE DE BREVET EUROPEEN

(11) **EP 2 549 012 A1**
(43) Date de publication de la demande: **23.01.2013**
(21) Numéro de dépôt: 11174720.0
(22) Date de dépôt: 20.07.2011
(51) Int. Cl.: D21C 5/00, D21C 5/02

(54) **Procédé de traitement de papier résistant à l'état humide**

(71) Demandeur: Realco SA, 1348 Louvain La Neuve (BE); Celodev SARL, 51260 Anglure (FR)
(72) Inventeur: Boels, Gauthier, 1040 Bruxelles (BE); Blackman, Gordon, 1380 Lasnes (BE); Bajul, Gilles, 51120 Villeneuve Saint Vistre (FR)
(74) Mandataire: Coulon, Ludivine

(57) **Abrégé**

Procédé de traitement de papier REH comprenant- une étape de pulpage dudit papier REH dans une cuve de pulpage en présence d'une phase aqueuse dont le pH est éventuellement préalablement ajusté, une étape d'addition d'un cocktail enzymatique à ladite cuve de pulpage, et une étape d'hydrolyse dudit papier REH ; ledit procédé comprenant en outre une étape d'addition d'une quantité prédéterminée d'un agent oxydant à ladite cuve de pulpage avant l'étape d'hydrolyse dudit papier REH.

## Description

La présente invention se rapporte à un procédé de traitement de papier REH comprenant
- une étape de pulpage dudit papier REH dans une cuve de pulpage en présence d'une phase aqueuse dont le pH est éventuellement préalablement ajusté,
- une étape d'addition d'un cocktail enzymatique à ladite cuve de pulpage, et
- une étape d'hydrolyse dudit papier REH.

Le papier REH (résistant à l'état humide) est un type de papier dont la résistance à l'état humide est améliorée par la présence d'additifs du type polyamidoamine-épichlorhydrine.

De manière générale, le papier est constitué de nombreuses fibres liées entre elles par des liaisons hydrogène qui s'établissent entre les fibres au cours du séchage du papier et confèrent ainsi la résistance à l'état sec. Lors du séchage du papier, les atomes d'hydrogènes des groupes acides des fibres se rapprochent les uns des autres pour former des liaisons hydrogènes. En présence d'eau, les liens hydrogènes sont aisément rompus et ceci a pour effet de diminuer fortement la résistance mécanique de la feuille de papier qui se désintègre alors rapidement.

Pour obtenir des papiers résistants à l'état humide pour les papiers ménagers, d'affichage, d'étiquetage, ..., des résines thermodurcissables (de préférence cationiques) sont ajoutées à la pâte à papier. De cette façon, les résines thermodurcissables, par exemple du type polyamidoamine-épichlorhydrine, s'adsorbent sur les fibres plutôt anioniques et réticulent les fibres du papier ensemble diminuant ainsi le nombre de liaisons hydrogène impliquées dans la résistance du papier. En présence d'eau, le papier ainsi traité est moins sujet à la désintégration puisque le nombre de liaisons hydrogène impliquées est réduit et les réticulations par les résines thermodurcissables du type polyamidoamine-épichlorhydrine ne sont plus sensibles à l'eau.

Conventionnellement, les papiers traditionnels sont récupérés pour être ensuite recyclés. Le recyclage du papier traditionnel comprend tout d'abord une étape de pulpage du papier en présence d'eau pour le désintégrer. Les papiers REH étant moins sensibles à l'eau, ils ne sont donc pas aisément recyclables par le fait que l'étape de pulpage ne permet pas de désintégrer les liaisons entre les fibres, à cause de la réticulation par les résines thermodurcissables du type polyamidoamine-épichlorhydrine.

Il existe donc aujourd'hui un besoin de mettre au point un procédé permettant de traiter les papiers REH dans le but de les recycler, et ce, que ce soit pour les papiers REH usagés à recycler, le rebut de papiers REH produits mais présentant certains défauts, par exemple suite à une défaillance des machines de production, ou encore pour des mélanges de papiers conventionnels comprenant une certaine proportion de papiers REH.

Même si le problème ne se pose pas vraiment pour des mélanges de papiers conventionnels comprenant une petite quantité de papier REH, comme c'est le cas des déchets à base de papier récupérés dans les collectes d'ordures, le recyclage des papiers résistants à l'état humide est difficile à effectuer par les voies classiques de recyclage de par sa résistance à l'état humide justement.

Aujourd'hui, les papiers REH récupérés sont généralement incinérés puisque l'étape de pulpage ne peut être mise en oeuvre. Ces résines thermodurcissables du type polyamidoamine-épichlorhydrine sont des produits organochlorés, et leur incinération a pour résultat l'émission d'halogènes organiques néfastes pour l'environnement et dont l'abattement nécessite des composés coûteux.

De nombreux procédés de traitement de ces papiers REH ont fait l'objet de documents de brevet. Toutefois, aucun des procédés décrits n'a été réellement mis en oeuvre dans l'industrie papetière, vraisemblablement par ce que les rendements sont faibles et ne permettent pas un recyclage rentable.

Par exemple, le document US 5330619 divulgue le traitement de papier résistant à l'état humide avec une enzyme capable d'hydrolyser la résine conférant la résistance à l'état humide dans des conditions qui favorisent la dégradation ou la dépolymérisation de la résine polyamidique.

Ces enzymes sont des protéases, des cellulases, des lactamases et des amidases qui dépolymérisent ou dégradent ladite résine

Ce document divulgue en outre qu'une amylase peut être utilisée, des détergents, un alcalin, des agents oxydants comme du peroxyde, pour favoriser l'hydrolyse par les protéases, des cellulases et des hémicellulases et des agents alcalins.

Toutefois, ce document, bien que tentant de décrire un procédé de traitement de papier REH ne donne comme exemple qu'une dégradation d'une résine conférant la résistance à l'état humide, sans que celle-ci ne soit réticulée dans du papier. Dans l'exemple, la résine est traitée par différents enzymes et l'efficacité de ceci est quantifiée simplement par la détection ou la non-détection de produits de dégradation de la résine. Ce document ne donne donc aucune information quant à l'efficacité de ces enzymes au niveau de la dégradation de résines thermodurcissables impliquées dans les liaisons entre fibres du papier.

Un autre enseignement est donné dans le document GB 2296513. Ce document revendique l'utilisation d'une hémicellulase pour dégrader le papier résistant à l'état humide. Le traitement enzymatique est effectué à pH 6. Dans le texte de ce document, il est fait mention, sans exemplification que le traitement enzymatique peut être suivi d'un traitement par un alcalin et/ou par un agent oxydant.

L'alcalin peut être NaOH ou KOH, tandis que l'oxydant peut être de l'hypochlorite de sodium, du chlorure de sodium et du peroxyde d'hydrogène.

Dans l'exemple illustratif de ce document, l'échantillon est considéré comme étant pulpé de manière satisfaisante lorsqu'il n'y a plus de réseau de fibres visibles à l'oeil nu. Aujourd'hui, ce procédé n'est pas largement utilisé dans l'industrie du papier car il est peu rentable. En effet, les teneurs enzymatiques utilisées dans les exemples sont particulièrement élevées et le temps de réaction également.

La présente invention a pour but de pallier les inconvénients de l'état de la technique en procurant un procédé applicable industriellement, qui ne met pas en oeuvre de substances incompatibles avec le papier et les procédés utilisés actuellement. En effet, les critères de qualité des papiers sont des paramètres représentatifs de chaque industrie papetière. Les papetiers sont particulièrement réfractaires à l'alimentation d'une substance nouvelle susceptible de modifier les propriétés du papier et/ou simplement non compatibles.

A cette fin, il est prévu suivant l'invention un procédé tel qu'indiqué au début, caractérisé en ce que ledit procédé comprend en outre une étape d'addition d'une quantité prédéterminée d'un agent oxydant à ladite cuve de pulpage, avant l'étape d'hydrolyse dudit papier REH.

Cette façon, l'introduction d'une quantité prédéterminée d'un agent oxydant à un effet catalyseur sur la dégradation enzymatique par différents enzymes, en particulier par les laccases Ceci est d'autant plus surprenant que l'ajout de l'agent oxydant seul, sans la présence d'enzymes renforce la propriété de résistance mécanique du papier REH à l'état humide tandis que la présence de l'agent oxydant conjointement au cocktail enzymatique permet de diminuer la résistance à l'état humide du papier et donc d'obtenir une hydrolyse enzymatique et chimique satisfaisante. En effet, tout est une question de compromis, les agents oxydants en milieu basique réagissent avec les fibres cellulosiques en en diminuant la longueur. Ceci permet une meilleure résistance mécanique et donc améliore la résistance à la rupture. Une quantité trop élevée d'agents oxydants permet de diminuer la caractéristique de résistance à la rupture mais risque d'avoir un impact très négatif sur l'activité enzymatique.

Avantageusement, ledit pH de la phase aqueuse et compris entre 7,5 et 8,4, ce qui représente un compromis optimal entre pH des eaux de procédé utilisées pour l'étape de pulpage et activité enzymatique, le but étant de ne pas compromettre en outre les étapes ultérieures de la fabrication du papier et donc d'atteindre un pH compatible avec la fabrication du papier. Par exemple, une protéase présente une meilleure activité lorsque le milieu de réaction est alcalin.

Dans une forme de réalisation préférentielle, ledit pH est ajusté à l'aide de bicarbonate de sodium. De cette façon, le milieu réactionnel peut être additionné d'une base faible pour tendre vers un pH alcalin et donc favoriser l'action de certaines enzymes, comme par exemple une protéase. Le bicarbonate de sodium est compatible avec le procédé papetier.

Dans une forme particulière de réalisation du procédé selon l'invention, ledit agent oxydant est choisi dans le groupe constitué du peroxyde hydrogène, du persulfate de sodium et leur mélange. Il a en effet été montré suivant l'invention que ces substances oxydantes sont particulièrement compatibles avec l'activité enzymatique souhaitée et avec les étapes ultérieures du procédé de fabrication du papier.

Dans une forme de réalisation préférentielle selon l'invention, ledit cocktail enzymatique comprend au moins une laccase et une autre enzyme choisie dans le groupe constitué des protéases, des cellulases et des amylases.

En effet, la laccase est une enzyme particulièrement utile pour la dégradation du papier REH car elle permet d'oxyder les composés phénoliques résiduels contenus dans le papier REH. Les laccases sont des enzymes permettant d'oxyder les résidus de lignine provenant de la pâte à papier.

L'action de la laccase est favorisée en présence de certaines teneurs en oxydants. En présence de cellulase, la laccase se révèle particulièrement utile en ce que la cellulase est sensible à la présence d'agents oxydants. Si la teneur en agent oxydant exogène est trop élevée, la cellulase perd son activité et l'efficacité de l'hydrolyse de la cellulose est réduite. Toutefois, les laccases sont des enzymes oxydantes qui ont donc un effet catalyseur oxydant. En présence de laccase et de cellulases, l'efficacité du pulpage du papier REH est donc améliorée puisque les laccases dégradent les composés phénoliques et la lignine résiduelle et génèrent un milieu oxydant qui n'est pas néfaste à l'activité des cellulases, contrairement à un apport exogène d'agent oxydant, mais efficace pour la dégradation de la cellulose lors du pulpage, puisque la cellulose hydrolysée est quant à elle dégradée en présence d'agent oxydant qu'ils soient exogènes ou non.

Dans une forme de réalisation préférentielle du procédé selon l'invention, le procédé comprend en outre, préalablement à l'étape de pulpage, une étape de détermination de ladite quantité prédéterminée de l'agent oxydant, ladite étape de détermination comprenant :
- un pulpage de n échantillons dudit papier REH en présence d'eau et d'au moins une laccase avec obtention de n échantillons de pulpe, en présence de n quantités prédéterminées différentes d'agent oxydant,
- une fabrication de formettes de papier à partir dudit papier REH pulpé
- une mesure d'un indice d'éclatement des formettes de papiers,
- un calcul de la variation d'indice d'éclatement entre l'indice d'éclatement d'une formette de papier REH non traité enzymatiquement et l'indice d'éclatement des formettes traitées enzymatiquement en présence des diverses quantité d'agent oxydant, et
- une détermination de la quantité optimale d'agent oxydant correspondant au maximum de ladite variation de l'indice d'éclatement, ladite quantité optimale d'agent oxydant représentant ladite quantité prédéterminé d'agent oxydant.

De cette façon, il est possible, en fonction du type de papier à traiter (mélange de papiers à recycler comprenant une certaine proportion de papier REH, papier REH seul, ...) de déterminer, préalablement au pulpage, les conditions optimales d'oxydation de la lignine résiduelle par la laccase ce qui signifie, qu'une fois ce paramètre défini, le procédé de désintégration dudit papier REH sera directement optimal puisque la teneur en agent oxydant a été préalablement déterminée. On se place donc, dans la cuve de pulpage, dans des conditions optimales d'efficacité pour la laccase.

Avantageusement, ledit cocktail enzymatique comprend en outre au moins une cellulase, préférentielle pour l'hydrolyse de la cellulose présente majoritairement dans le papier.

Comme on l'a mentionné précédemment, en présence de cellulase, la laccase se révèle particulièrement utile en ce que la cellulase est sensible à la présence d'agents oxydants. Si la teneur en agent oxydant exogène est trop élevée, la cellulase perd son activité et l'efficacité de l'hydrolyse de la cellulose est réduite. Toutefois, en présence de laccase et de cellulases, l'efficacité du pulpage du papier REH est donc améliorée puisque les laccases dégradent les résidus phénoliques et de lignines résiduels provenant de la pâte à papier et génèrent un milieu oxydant qui n'est pas néfaste à l'activité des cellulase, contrairement à un apport exogène d'agent oxydant, mais efficace pour la dégradation de la cellulose lors du pulpage, puisque la cellulose hydrolysée est quant à elle dégradée en présence d'agent oxydant qu'ils soient exogènes ou non.

Dans une autre variante selon l'invention, le procédé comprend en outre, préalablement à l'étape de pulpage, une étape de détermination de ladite quantité prédéterminée de l'agent oxydant, ladite étape de détermination comprenant :
- un pulpage de n échantillons de carboxyméthylcellulose en présence d'eau de pulpage et d'au moins une cellulase avec obtention de n échantillons de pulpe, en présence de n quantités prédéterminées différentes d'agent oxydant,
- une mesure de la viscosité des n échantillons de pulpe au cours du temps,
- un calcul de la variation de la viscosité entre le temps zéro et un temps prédéterminé compris entre 10 et 30 minutes, et
- une détermination de la quantité optimale d'agent oxydant correspondant à la perte de viscosité maximale dudit échantillons de pulpe, ladite quantité optimale d'agent oxydant représentant ladite quantité prédéterminé d'agent oxydant.

De cette façon, il est possible, en fonction des conditions de pulpage du papier à traiter (pH, concentration en ions, température, ...) et des cellulases utilisées, de se placer dans la cuve de pulpage dans des conditions optimales d'efficacité pour les cellulases, et ce par des mesures simples de viscosité d'échantillons de carboxyméthylcellulose aisées à mettre en place qui donnent rapidement une information quand à l'optimum de l'activité enzymatique et de la désintégration attendue dans la cuve de repulpage.

Cette étape de détermination préalable de la quantité prédéterminée d'agent oxydant optimale pour le fonctionnement des cellulases peut en outre être combinée à une étape de détermination préalable de la quantité prédéterminée d'agent oxydant optimale pour le fonctionnement des laccases. Dans ce cas, on veillera dans la cuve de pulpage à ajouter la quantité prédéterminée d'agent oxydant représentant le meilleur compromis entre les deux optima de teneurs en agent oxydant (celui de la cellulase et celui de la laccase).

Dans une forme de réalisation avantageuse du procédé selon l'invention, ledit cocktail enzymatique comprend une ou plusieurs cellulases, une ou plusieurs protéases, une ou plusieurs laccases et éventuellement une ou plusieurs amylases, de préférence dans les proportions de 15 à 45 % de cellulase, de 15 à 45 % de protéase, de 10 à 40 % de laccase, de cinq à 20 % d'amylase, de manière plus préférentielle, dans les proportions de 30 à 40 % de cellulase, de 30 à 40 % de protéase, de 15 à 25 % de laccase et de 7 à 12 % d'amylase, les pourcentages étant en poids par rapport au poids total des enzymes.

De cette façon, l'activité combinée des enzymes permet de favoriser la dégradation du papier REH. Ce papier comprend des liaisons cellulose-polyamidoamine-épichlorhydrine (PAE). Les cellulases et les protéases peuvent rompre les liaisons entre la cellulose et les résidus PAE et libèrent donc les résidus PAE dans la pâte à papier. Toutefois, en rompant la liaison cellulose-PAE, le site actif est occupé par des résidus cellulose puisque les celluloses et les protéases peuvent hydrolyser les liaisons cellobioses ou glucobioses. Les résidus REH ainsi libérés ne peuvent plus réagir avec les autres fibres de cellulose présentes dans la pâte à papier.

Avantageusement, ledit cocktail enzymatique est sous la forme d'une composition liquide qui comprend les proportions d'enzymes suivantes : de 8 à 12 parties de cellulase, de 4 à 10 parties de laccase, de 2 à 6 parties d'amylase et éventuellement de 5 à 12 parties de protéases, dans une phase de stabilisation comprenant un composé stabilisant, comme par exemple de l'acide 4-formyl-phényl-bronique ou du monopropylène glycol.

Dans une forme de réalisation particulièrement préférentielle, ladite quantité prédéterminée d'oxydant est comprise entre 0,01 et 0,1 % en poids par rapport au poids total de pâte à papier obtenue par repulpage dudit papier REH et ceci afin d'assurer l'optimum entre efficacité améliorée de la laccase et efficacité réduite des cellulases.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est un graphique montrant la différence de viscosité en fonction de la teneur en peroxyde d'hydrogène pour les enzymes de type cellulase.
La figure 2 est un graphique montrant la différence de viscosité en fonction de la teneur en persulfate de calcium pour les enzymes de type cellulase.
La figure 3 est un graphique montrant la différence de viscosité en fonction de la teneur en peroxyde d'hydrogène pour les enzymes de type laccase.
La figure 4 illustre la désintégration de deux types de papier dans les conditions selon l'invention.
La figure 5 illustre l'indice de rupture en fonction des différents traitements appliqués.
La figure 6 illustre la proportion de REH résiduel en fonction des différents traitements appliqués.
La figure 7 est un graphique montrant la répartition des flocs dans la formette obtenue à l'aide de l'exemple comparatif.

Sur les figures, les éléments identiques ou analogues portent les mêmes références.

Le procédé selon l'invention permet comme mentionné précédemment, de traiter différents types de mélange de papier comprenant du papier résistant à l'état humide. Ces mélanges de papiers peuvent provenir de diverses sources. Ces sources peuvent être de rebut de production, par exemple, si les machines de production présentent une avarie, il peut arriver qu'une grande quantité de papier REH soit en cours de production, mais non finalisée. Dès lors, cette quantité de papier REH doit être réintroduite dans la filière de production, ce qui aujourd'hui n'est pas possible économiquement.

D'autre part, de nos jours, les tentatives de récupération des papiers REH sont nombreuses (étiquettes, affiches ou affichettes publicitaires résistantes à l'état humide, papiers ménagers, essuie-tout, hygiénique, ...), mais ces papiers ne sont pas encore recyclables.

Dans le procédé selon l'invention, ces échantillons de papiers sont pulpés en présence d'une phase aqueuse dont le pH a été éventuellement ajusté à une valeur comprise entre 7,4 et 8,4 à l'aide de bicarbonate de sodium.

Une quantité prédéterminée d'agent oxydant qui peut être du peroxyde d'hydrogène ou du persulfate de calcium a été ajoutée à la cuve de repulpage dans laquelle le papier REH est trituré en phase aqueuse.

Un cocktail enzymatique composé, dans une forme de réalisation préférentielle d'une ou de plusieurs protéases, d'une ou de plusieurs laccases, d'une ou de plusieurs amylase et d'une ou de plusieurs cellulases est ajouté. On laisse les enzymes digérer les fibres de la pâte à papier pendant environ 30 à 45 minutes à une température d'environ 40° à 50°C.

De cette façon, la température de digestion est peu élevée correspondant bien aux demandes des papetiers soucieux de limiter leur consommation énergétique et ce pendant un intervalle de temps raisonnable économiquement.

Ce procédé de traitement de papier REH est généralement précédé d'une étude de détermination d'un optimum pour l'agent oxydant pour déterminer ladite quantité prédéterminée d'agent oxydant à ajouter dans la cuve de pulpage du papier. Cet optimum est déterminé en tenant compte de la nature du papier et de l'eau de pulpage utilisée et donc de la nature des enzymes qui seront utilisées. Si le papier est riche en amidon, la teneur en amylase sera augmentée. Si le papier à recycler comprend une grande quantité de résine thermodurcissable pour conférer la résistance à l'état humide, la teneur en laccase peut être augmentée. De même, il sera tenu compte de la nature de la résine thermodurcissable utilisée pour conférer la résistance à l'état humide ou de la présence d'un colorant majoritaire. Une fois cet optimum déterminé, la quantité prédéterminée d'agent oxydant est déterminée et ajoutée à la cuve de pulpage.

### Exemple 1.-

5 échantillons de 30 grammes de carboxyméthylcellulose dans un volume final de 1000 ml d'eau provenant de la cuve de pulpage ont été préparés pour obtenir des échantillons de pulpe. Le pH a été ajusté à 8,2 à l'aide de bicarbonate de sodium. Les échantillons de pulpe présentaient une viscosité initiale de 300 Pa.s. De la cellulase a été ajoutée à raison de 0,3 unité par gramme de carboxyméthylcellulose. Après 10 minutes, la viscosité est mesurée. En effet, lorsque les cellulases exercent leur action, la viscosité de la pulpe de carboxyméthylcellulose diminue de par la digestion enzymatique, à savoir l'hydrolyse des chaines cellulosiques. Une augmentation de la viscosité, et donc une diminution du Δ viscosité représente une diminution de l'activité enzymatique.

Les 5 échantillons ont également été additionnés de diverses quantités de peroxyde d'hydrogène (dilué à 10% en poids) telles que présentées au tableau 1, afin de déterminer l'optimum de concentration en agent oxydant à ajouter.

**Tableau 1**

| N° échantillon | Quantité d'oxydant | Viscosité initiale (Pa.s) | Viscosité après 10 min (Pa.s) | Δ viscosité (Pa.s) |
|---|---|---|---|---|
| 1 | 0 ml | 300 | 104 | 196 |
| 2 | 10 ml | 300 | 102 | 198 |
| 3 | 30 ml | 300 | 96 | 204 |
| 4 | 50 ml | 300 | 102 | 198 |
| 5 | 100 ml | 300 | 216 | 184 |

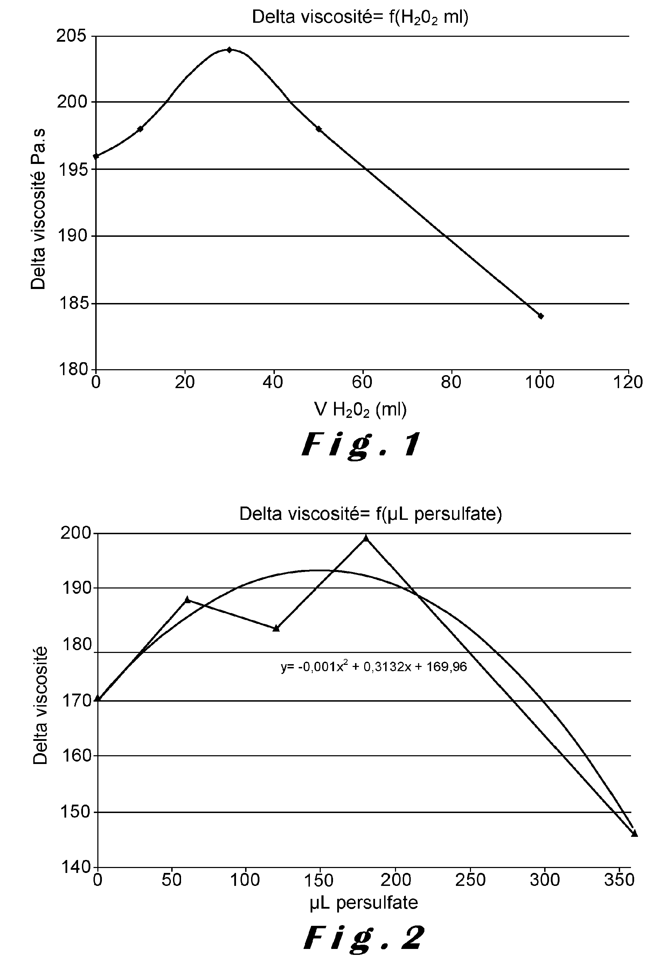

Le Δ viscosité a été porté en graphique à la figure 1 en ordonnée en fonction de la teneur en agent oxydant et un optimum de concentration en agent oxydant a été déterminé.

Comme on peut le constater, entre 10 et 50 ml d'agent oxydant pour 9 gr de carboxyméthylcellulose, les cellulases présentent un optimum d'activité.

### Exemple 2.-

Le même essai a été effectué en présence de persulfate de calcium. Les 5 échantillons ont également été additionnés de diverses quantités de persulfate de calcium (à 30% en poids) telles que présentées au tableau 2, afin de déterminer l'optimum de concentration en agent oxydant à ajouter.

**Tableau 2**

| N° échantillon | Quantité d'oxydant | Viscosité initiale (Pa.s) | Viscosité après 10 min (Pa.s) | Δ viscosité (Pa.s) |
|---|---|---|---|---|
| 1 | 0 µl | 300 | 130 | 170 |
| 2 | 60 µl | 300 | 112 | 188 |
| 3 | 120 µl | 300 | 116 | 184 |
| 4 | 180 µl | 300 | 101 | 199 |
| 5 | 360 µl | 300 | 154 | 146 |

Le Δ viscosité a été porté en graphique à la figure 2 en ordonnée en fonction de la teneur en agent oxydant et un optimum de concentration en agent oxydant a été déterminé.

Comme on peut le constater, entre 50 et 250 µl d'agent oxydant pour 9 gr de carboxyméthylcellulose, les cellulases présentent un optimum d'activité.

### Exemple 3.-

On a étudié la variation de l'indice d'éclatement de formettes de papier ayant subi un traitement enzymatique à la laccase en présence de diverses teneur en oxydant.

On a préparé de la pâte à papier selon la proportion de 30gr de formettes de papier par titre d'eau. On a ensuite ajouté 0,06% de laccase par gramme de formettes sèches et on a laissé le tout réagir pendant 30 minutes à 40°C (les formettes sont des petits morceaux de papier REH qui doivent être normalement traités pour son recyclage).

**Tableau 3.-**

| N° échantillon | Quantité d'oxydant |
|---|---|
| 1 | 0 µl |
| 2 | 20 µl |
| 3 | 40 µl |
| 4 | 60 µl |
| 5 | 80 µl |
| 6 | 100 µl |

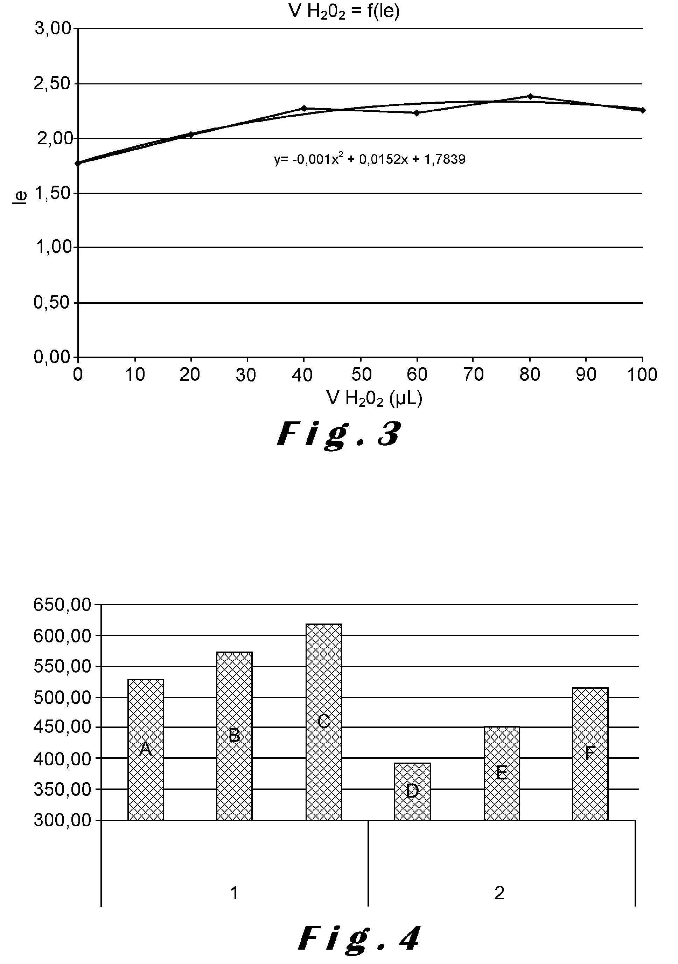

Les valeurs de l'indice d'éclatement f(le) ont été portées en fonction du volume de peroxyde d'hydrogène à 10% à la figure 3. Comme on peut le voir, l'optimum de la teneur en agent oxydant est atteint à une teneur en peroxyde d'hydrogène comprise entre 0,02% et 0,03%

### Exemple 4.-

Un cocktail d'enzyme comprenant une laccase à raison de 6 parties, une amylase à raison de 3 parties, une protéase à raison de 10 parties et une cellulase à raison de 10 parties dans une phase de stabilisation contenant un agent de stabilisation a été réalisé.

Deux échantillons de papier REH ont été préparés. Le premier échantillon (n°1) est préparé à partir de papier essuie-tout résistant à l'état humide, c'est-à-dire du papier présentant une résistance de rupture à l'état humide = 6% de la résistance de rupture à l'état sec, à raison de 20 g dans 1000 ml d'eau, ajustée à un pH de 8,2. Le deuxième échantillon (n°2) est préparé à partir de papier essuie-tout hyper-résistant à l'état humide, c'est-à-dire du papier présentant une résistance de rupture à l'état humide = 13% de la résistance de rupture à l'état sec, à raison de 20 g dans 1000 ml d'eau ajustée à un pH de 8,2.

Chaque échantillon a été traité par une quantité prédéterminée de peroxyde d'hydrogène à raison de 0,01% en poids en absence et en présence de 0,1 % en poids de composition enzymatique décrite ci-dessus. Les échantillons 1 et 2 ont été triturés pendant 40 minutes à 40°C avec leurs traitements respectifs dans une phase aqueuse à pH ajusté à 8,2 à l'aide de bicarbonate de sodium. A partir de la pâte à papier obtenue, des feuilles (formettes) ont été réalisées et ensuite déchirées.

Les indices de déchirure sur ces papiers sans traitement, avec ladite quantité prédéterminée (optimale) de peroxyde d'hydrogène, mais sans enzyme et avec ladite quantité prédéterminée (optimale) de peroxyde d'hydrogène et avec le cocktail enzymatique, ont été mesurés à partir des résultats suivants présentés au tableau 4:

**Tableau 4.-**

| Paramètre | Papier REH n°1 | | | Papier REH n°2 | | |
|---|---|---|---|---|---|---|
| | Blanc | H₂O₂ | ENZ + H₂O₂ | Blanc | H₂O₂ | ENZ+H₂O₂ |
| Grammage (g/m²) | 57,8 | 53,0 | 59,5 | 66,8 | 55,5 | 62,1 |
| Indice de rupture à sec | 20,77 | 22,77 | 30,39 | 9,99 | 12,83 | 19,08 |
| Allongement (%) | 0,94 | 0,85 | 1,08 | 0,70 | 0,64 | 0,95 |
| Proportion REH | 0,85 | 0,88 | 0,75 | 1,13 | 1,65 | 1,00 |
| Indice de déchirure à sec | 530,40 | 573,61 | 619,60 | 454,17 | 394,43 | 515,33 |

Le grammage est une grandeur caractérisant un papier ou un carton, correspondant à sa densité exprimée sous la forme de la masse qu'il représente pour une surface donnée (densité surfacique). L'unité est typiquement le gramme par mètre carré (g/m2). Le grammage est défini par la norme ISO 536.

L'indice de rupture à sec est un paramètre renseignant la résistance du produit sec à la rupture lors d'une traction. Ce paramètre est mesure selon la méthode ISO 1924-2

L'allongement d'un papier est un paramètre identifiant l'augmentation de longueur après application d'une force correspondant à un effort appliqué de 200 N/cm. Le papier doit avoir des caractéristiques dimensionnelles stables, de manière à éviter les problèmes de repérage et d'élargissement des points de trame. C'est la carcasse - tissu imprégné d'élastomère - qui doit assurer cette stabilité (voir méthode ISO 1924-3).

Le test d'allongement peut être réalisés selon la proposition faite à l'ISO sous la référence ISO/TC 130/WG4/239.

La proportion REH est une donnée représentant le rapport entre la résistance à la rupture humide et la résistance à la rupture sèche. Dans le cas présent : la mesure est faite avec un écartement de mâchoires de 6 mm pour obtenir des valeurs mesurables :

L'indice de déchirure est obtenu en suivant la méthode de la norme ISO 1974.

Les indices de déchirure ont été portés en graphique à la figure 4 par rapport aux différents traitements des échantillons. La colonne A représente l'échantillon 1 non traité, la colonne B représente l'échantillon 1 traité uniquement par l'agent oxydant, tandis que la colonne C représente l'échantillon 1 traité par l'association de l'agent oxydant avec le cocktail enzymatique. La colonne D représente l'échantillon 2 non traité, la colonne E représente l'échantillon 2 traité uniquement par l'agent oxydant, tandis que la colonne F représente l'échantillon 2 traité par l'association de l'agent oxydant avec le cocktail enzymatique.

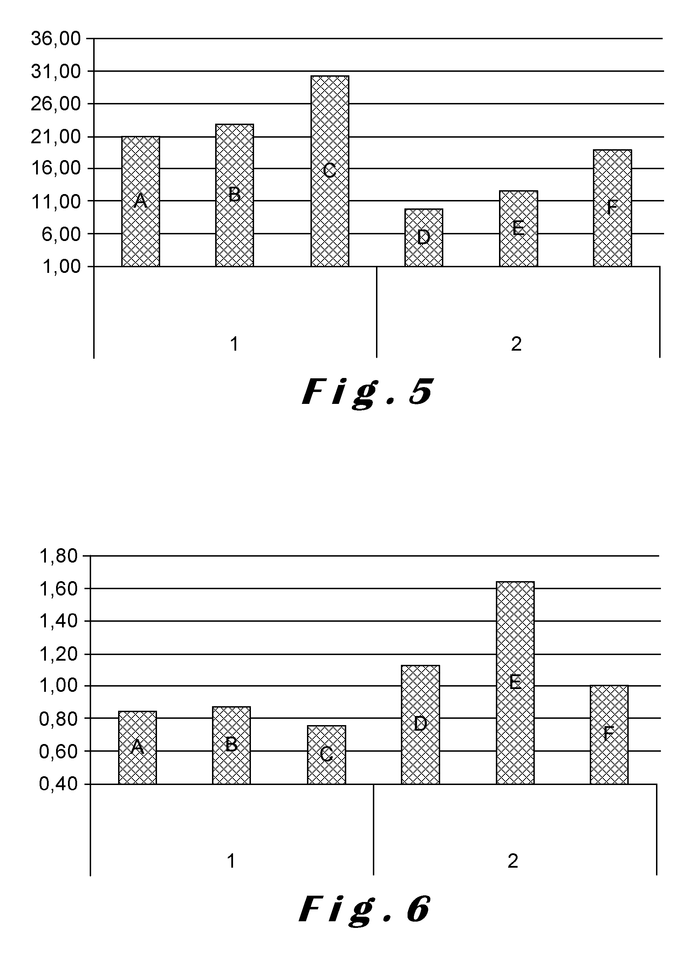

Les indices de rupture ont été portés en graphique à la figure 5 par rapport aux différents traitements des échantillons. La colonne A représente l'échantillon 1 non traité, la colonne B représente l'échantillon 1 traité uniquement par l'agent oxydant, tandis que la colonne C représente l'échantillon 1 traité par l'association de l'agent oxydant avec le cocktail enzymatique. La colonne D représente l'échantillon 2 non traité, la colonne E représente l'échantillon 2 traité uniquement par l'agent oxydant, tandis que la colonne F représente l'échantillon 2 traité par l'association de l'agent oxydant avec le cocktail enzymatique.

Comme on peut le voir, la combinaison enzyme et agent oxydant permet d'obtenir un meilleur indice de rupture. En outre, un meilleur indice de déchirure a été obtenu, ceci signifie que la désintégration obtenue dans l'étape de triturage dans la cuve de pulpage a été plus efficace. En effet, si la déchirure est meilleure, ceci signifie que les flocs obtenus étaient plus petits et permettent donc d'atteindre une déchirure plus homogène et plus fine. Les formations de feuilles montrent de façon qualitative cette évolution, le traitement permet une défibration des fibres de celluloses plus complète et dès lors, le papier recyclé est de meilleure qualité.

A la figure 6, on a porté en graphique la proportion REH. La colonne A représente l'échantillon 1 non traité, la colonne B représente l'échantillon 1 traité uniquement par l'agent oxydant, tandis que la colonne C représente l'échantillon 1 traité par l'association de l'agent oxydant avec le cocktail enzymatique. La colonne D représente l'échantillon 2 non traité, la colonne E représente l'échantillon 2 traité uniquement par l'agent oxydant, tandis que la colonne F représente l'échantillon 2 traité par l'association de l'agent oxydant avec le cocktail enzymatique.

Comme on peut le constater de la figure 6, la réduction du taux de REH résiduel est liée à l'activité enzymatique. Les résultats indiquent que le peroxyde d'hydrogène a un effet néfaste sur les caractéristiques de REH pour la pâte désintégrée (la proportion REH résiduel augmente surtout pour l'échantillon n° 2. Pour obtenir un faible indice de REH résiduel, il est nécessaire de combiner l'oxydant et les enzymes pour réduire la proportion REH résiduelle.

### Exemple comparatif.-

Une analyse comparative de la désintégration d'échantillons de papier a été effectuée avec différents cocktails enzymatiques présentés au tableau 5.

**Tableau 5.-**

| N° d'échantillon | Traitement effectué |
|---|---|
| 1 | Aucun |
| 2 | Cocktail composé de 2/3 de cellulases et d'1/3 de protéases |
| 3 | Cocktail composé de 1/2 de cellulases et ½ de protéases |
| 4 | Cocktail composé de 1/3 de cellulases, 1/3 de protéases et d'1/3 de laccases |

Les différents échantillons ont été triturés en présence des différents traitements mentionnés au tableau 5 pendant 45 minutes à une température de 40°C dans une phase aqueuse préalablement ajustée à pH 8,4.

A partir de la pâte à papier obtenue, des feuilles (formettes) ont été fabriquées et la taille des flocs a été évaluée par analyse d'image. La taille des flocs non désintégrée est calculée.

| N° d'échantillon | surface maximale des flocs | % de surface avec des flocs |
|---|---|---|
| 1 | 4,98 mm² | 1,8% |
| 2 | 3,09 mm² | 1,6% |
| 3 | 2,98 mm² | 1,1% |
| 4 | 2,71 mm² | 1,1% |

Comme on peut le constater, les papiers ayant subi un traitement enzymatique, en particulier les échantillons 3 et 4 présentent une surface inférieure à ceux non traités.

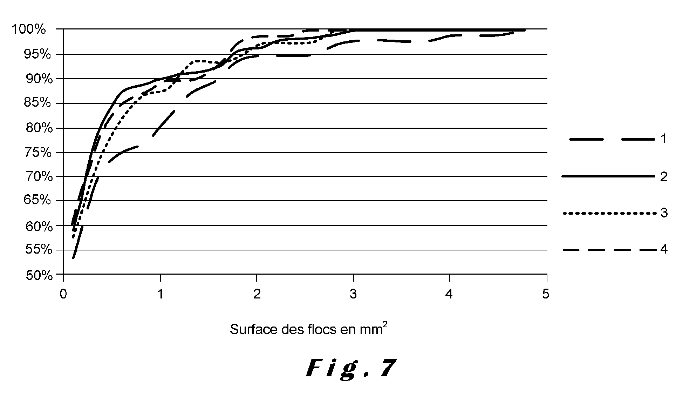

De plus, la répartition des flocs dans la formette a été mesurée et portée en graphique à la figure 7. Comme on peut le constater, la répartition est supérieure pour les papiers traités par les enzymes (traitement 2, 3, et 4) par rapport à l'échantillon n°1.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de traitement de papier REH comprenant
- une étape de pulpage dudit papier REH dans une cuve de pulpage en présence d'une phase aqueuse dont le pH est éventuellement préalablement ajusté,
- une étape d'addition d'un cocktail enzymatique à ladite cuve de pulpage, et
- une étape d'hydrolyse dudit papier REH,
**caractérisé en ce que** ledit procédé comprend en outre une étape d'addition d'une quantité prédéterminée d'un agent oxydant à ladite cuve de pulpage avant l'étape d'hydrolyse dudit papier REH

2. Procédé selon la revendication 1, dans lequel ledit pH de la phase aqueuse et compris entre 7,5 et 8,4.

3. Procédé selon la revendication 1 ou la revendication 2, dans lequel ledit pH est ajusté à l'aide de bicarbonate de sodium.

4. Procédé selon l'une quelconque des revendications 1 à 3 dans lequel ledit agent oxydant est choisi dans le groupe constitué du peroxyde hydrogène, du persulfate de sodium et leur mélange.

5. Procédé selon l'une quelconque des revendications 1 à 4, dans lequel ledit cocktail enzymatique comprend au moins une laccase et une autre enzyme choisie dans le groupe constitué des protéases, des cellulases et des amylases.

6. Procédé selon la revendication 5, comprenant en outre, préalablement à l'étape de pulpage, une étape de détermination de ladite quantité prédéterminée de l'agent oxydant, ladite étape de détermination comprenant :
- un pulpage de n échantillons dudit papier REH en présence d'eau et d'au moins une laccase avec obtention de n échantillons de pulpe, en présence de n quantités prédéterminées différentes d'agent oxydant,
- une fabrication de formettes de papier à partir dudit papier REH pulpé
- une mesure d'un indice d'éclatement des formettes de papiers,
- un calcul de la variation d'indice d'éclatement entre l'indice d'éclatement d'une formette de papier REH non traité enzymatiquement et l'indice d'éclatement des formettes traitées enzymatiquement en présence des diverses quantité d'agent oxydant
- une détermination de la quantité optimale d'agent oxydant correspondant au maximum de ladite variation de l'indice d'éclatement, ladite quantité optimale d'agent oxydant représentant ladite quantité prédéterminé d'agent oxydant.

7. Procédé selon l'une quelconque des revendications 1 à 6, dans lequel ledit cocktail enzymatique comprend en outre au moins une cellulase.

8. Procédé selon l'une quelconque des revendications 1 à 7, comprenant en outre, préalablement à l'étape de pulpage, une étape de détermination de ladite quantité prédéterminée de l'agent oxydant, ladite étape de détermination comprenant :
- un pulpage de n échantillons de carboxyméthylcellulose en présence d'eau de pulpage et d'au moins une cellulase avec obtention de n échantillons de pulpe, en présence de n quantités prédéterminées différentes d'agent oxydant,
- une mesure de la viscosité des n échantillons de pulpe au cours du temps,
- un calcul de la variation de la viscosité entre le temps zéro et un temps prédéterminé compris entre 10 et 30 minutes, et
- une détermination de la quantité optimale d'agent oxydant correspondant à la perte de viscosité maximale dudit échantillons de pulpe, ladite quantité optimale d'agent oxydant représentant ladite quantité prédéterminé d'agent oxydant.

9. Procédé selon la revendication 6, dans lequel ledit cocktail enzymatique comprend une ou plusieurs cellulases, une ou plusieurs protéases, une ou plusieurs laccases et éventuellement une ou plusieurs amylases, de préférence dans les proportions de 15 à 45 % de cellulase, de 15 à 45 % de protéase, de 10 à 40 % de laccase, de cinq à 20 % d'amylase, de manière plus préférentielle, dans les proportions de 30 à 40 % de cellulase, de 30 à 40 % de protéase, de 15 à 25 % de laccase et de 7 à 12 % d'amylase, les pourcentages étant en poids par rapport au poids total des enzymes.

10. Procédé selon la revendication 7, dans lequel ledit cocktail enzymatique comprend les proportions d'enzymes suivantes : de 8 à 12 parties de cellulase, de 4 à 10 parties de laccase, de 2 à 6 parties d'amylase et éventuellement de 5 à 12 parties de protéases.

11. Procédé selon l'une quelconque des revendications précédentes, dans lequel ladite quantité prédéterminée d'oxydant est comprise entre 0,01 et 0,1 % en poids par rapport au poids total de pâte à papier obtenue par repulpage dudit papier REH.
